Europäisches Patentamt

European Patent Office

Office européen des brevets

(19)

(11) **EP 1 523 175 A1**

(12) **EUROPEAN PATENT APPLICATION**

(43) Date of publication:
**13.04.2005 Bulletin 2005/15**

(51) Int Cl.[7]: **H04N 5/44**, H04N 7/00

(21) Application number: **03090338.9**

(22) Date of filing: **09.10.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **Weitbruch, Sébastien**<br>**78078 Mönchweiler (DE)** |
| | (74) Representative: **Hartnack, Wolfgang, Dipl.-Ing.**<br>**Deutsche Thomson-Brandt GmbH**<br>**European Patent Operations**<br>**Karl-Wiechert-Allee 74**<br>**30625 Hannover (DE)** |
| (71) Applicant: **DEUTSCHE THOMSON-BRANDT GMBH**<br>**78048 Villingen-Schwenningen (DE)** | |

(54) **Method and apparatus for automatic format decision related to the useful picture content part of a picture signal**

(57)   The invention concerns an automatic format decision related to the useful picture content part of a picture signal (INP) that may contain black bars and/or subtitles in the active picture. The processing includes:

- Determining (HLPF, BLADJ, GRDHT, BBI) whether or not black bars are present in the active picture by analysing the presence of significant horizontal borders, and where said borders are located;
- Determining (LCI) whether or not a luminous area located vertically in the middle of the useful picture content is present.

It is decided (FDEC) that the format of a current useful picture content part is not different from the format of a previous useful picture content part if the number (B1CNT, B2CNT) of luminance pixel values having a 'black' level exceeds a count number threshold.

It is decided (FDEC) that the current format is different if there are not too many candidate black bar borders, and the number (B1CNT, B2CNT) of luminance pixel values having a 'black' level exceeds the count number threshold, and there is a sufficient number (LGHTCNT) of bright pixel values in the middle area.

**Fig.10**

## Description

The invention relates to a method and to an apparatus for automatic format decision related to the useful picture content part of a picture signal that may contain black bars and/or subtitles in the active picture.

Background

TV pictures sent by broadcasters can have different formats, e.g. 4:3, 14:9, 16:9, 2:1, with or without subtitles. Often these picture formats are displayed on a TV screen with black horizontal or vertical bars. An important function of 16:9 TVs is the feature of zooming the input picture in order to fill the screen completely or to remove or reduce the black bars.

In many cases that zooming feature is controlled manually by a viewer, but a user would be interested in an automatic or semiautomatic letterbox detection which detects the real useful part of the screen and which enables the TV to provide the best zoom type possible. However, such function should take into account the additional broadcast of subtitles. When displaying such subtitles on the lower black bar the zoom should extend to the upper part of the screen only. Furthermore, new displays like Plasma Display Panels (PDP) suffering from burning-in effects leading to a reduced lifetime require the possibility to replace such black bars with a gray luminance level bar.

EP-A-0 913 994 discloses a letterbox detector which analyses whether a black bar is present or not, and whether a luminous centre area is present or not. Thereafter it is analysed whether a horizontal border between a dark area and the useful picture content part of the picture is present or not. The picture aspect format is selected according to the results of these anasysis steps.

Invention

A problem to be solved by the invention is to perform a more reliable automatic determination of the useful picture content part format in a received or replayed video signal, which format information can be used for a corresponding zoom operation. This problem is solved by the method disclosed in claim 1. An apparatus that utilises this method is disclosed in claim 2.

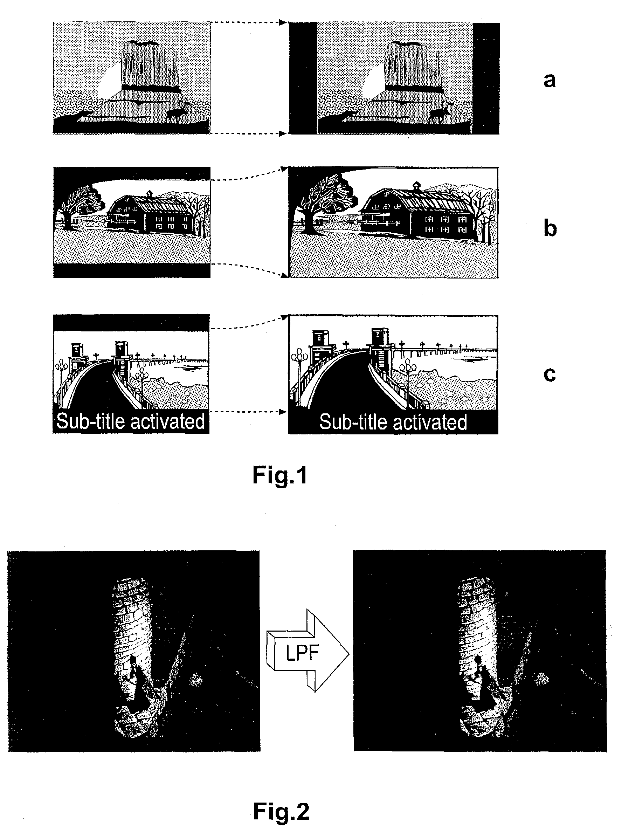

Fig. 1 illustrates the principle of format adapted zooming, wherein the left side shows the 4:3 format pictures as broadcast or transmitted, i.e. the source or input picture, whereas the right side shows how the received input picture is to be displayed on a 16:9 screen.

In Fig. 1a the input picture has full 4:3 format useful picture content. No horizontal zoom operation is carried out for the 16:9 screen in order to avoid a distinct geometrical distortion of the picture, leading to black left and right bars on the display.

In Fig. 1b the useful picture content in the input picture has 16:9 letterbox format. The zoom operation for display on the 16:9 screen is performed without producing a geometrical distortion in the displayed picture. No black bars will appear anywhere on the display.

In Fig. 1c the input picture has useful picture content in 16:9 format but additionally includes active sub-titles in the bottom black bar. The receiver or decoder-side zoom operation is restricted to the upper part of the picture in order not to suppress the sub-titles.

The invention facilitates the automatic detection of the format or aspect ratio of the useful picture content. It is determined whether or not black, or grey or dark, bars are present in the active picture and where significant horizontal borders between candidate black bars and the useful picture content part are located. It is also determined whether or not subtitles are present in the bars. Upon detection of sub-titles the precise start and end locations of the useful picture content part are calculated. Such items of information are evaluated together with additional parameters as explained below, leading to a final decision on the format of the useful picture content part, and optionally to a related zoom information, considering also the presence of subtitles. A particular advantage is that the invention provides a very reliable detection result for taking a new zoom format decision in order to avoid unexpected zoom format changes, i.e. wrong format changes.

With respect to the letterbox detection described in EP-A-0 913 994, the inventive letterbox detection shows several advantageous improvements:

- Automatic black level adjustment for gradient detection of horizontal transitions;
- Automatic adjustment of detection area;
- The sub-title detection is based on gradient activity in horizontal and vertical directions.

In principle, the inventive method is suited for an automatic format decision related to the useful picture content part of a picture signal that may contain black, or grey, bars and/or subtitles in the active picture, including the steps:

- Determining whether or not black, or grey, bars are present in the active picture by analysing whether significant horizontal borders are present between candidate black bars and said useful picture content part,
  and determining where said borders are located by comparing luminance pixel values in each one of two candidate black bar areas with a black level threshold and by counting in each candidate black bar area the number of pixel values having a 'black' level,
  and by binarising luminance pixels of the active picture using said black level threshold and determining for the binarised pixel values whether or not a current pixel is located at a horizontal border
  by multiplying or wheighting the value of the current pixel and the values of horizontally adjacent pixels and the values of corresponding pixels from an adjacent line with two-dimesional matrices of coefficients such that to a current pixel a first value is assigned if it is located at a horizontal border and a second value having a zero value or a sign opposite to that of said first value is assigned if it is not located at a horizontal border,
  wherein the first and second values are summed up per line and the two highest sum values exceeding a sum value threshold represent the lines where said borders are located;
- Determining whether or not a luminous area located vertically in the middle of the useful picture content is present, by comparing the values of luminance pixels in a candidate luminous area to a brightness level threshold and counting the number of luminance pixel values exceeding said brightness level threshold,
- in which method it is decided that the format of a current useful picture content part is not different from the format of a previous useful picture content part if said number of luminance pixel values having a 'black' level exceeds in each one of the two candidate black bar areas a pre-determined black pixel count number threshold,

wherein it is decided that the format of a current useful picture content part is different from the format of a previous useful picture content part if the following conditions are met:

Of said two highest sum values, both, the sum value which is related to the upper bar and the sum value which is related to the lower bar exceed a pre-determined sum value threshold but the total amount of said line related sum values for the current picture having a value exceeding said pre-determined sum value threshold is lower than a pre-determined maximum sum value number threshold;

Said number of luminance pixel values having a 'black' level exceeds in each one of the two candidate black bar areas a pre-determined black pixel count number threshold;

Said number of luminance pixel values exceeding said brightness level threshold is greater than a pre-determined bright pixel value count number threshold.

In principle the inventive apparatus, for automatic format decision related to the useful picture content part of a picture signal that may contain black, or grey, bars and/or subtitles in the active picture, includes:

- Means for determining whether or not black, or grey, bars are present in the active picture by analysing whether significant horizontal borders are present between candidate black bars and said useful picture content part,
  and for determining where said borders are located by comparing luminance pixel values in each one of two candidate black bar areas with a black level threshold and by counting in each candidate black bar area the number of pixel values having a 'black' level,
  and for binarising luminance pixels of the active picture using said black level threshold and determining for the binarised pixel values whether or not a current pixel is located at a horizontal border
  by multiplying or wheighting the value of the current pixel and the values of horizontally adjacent pixels and the values of corresponding pixels from an adjacent line with two-dimesional matrices of coefficients such that to a current pixel a first value is assigned if it is located at a horizontal border and a second value having a zero value or a sign opposite to that of said first value is assigned if it is not located at a horizontal border,

wherein the first and second values are summed up per line and the two highest sum values exceeding a sum value threshold represent the lines where said borders are located;

- Means for determining whether or not a luminous area located vertically in the middle of the useful picture content is present, by comparing the values of luminance pixels in a candidate luminous area to a brightness level threshold and counting the number of luminance pixel values exceeding said brightness level threshold;

- Means for deciding that the format of a current useful picture content part is not different from the format of a previous useful picture content part if said number of luminance pixel values having a 'black' level exceeds in each one of the two candidate black bar areas a pre-determined black pixel count number threshold,
and for deciding that the format of a current useful picture content part is different from the format of a previous useful picture content part if the following conditions are met:

Of said two highest sum values, both, the sum value which is related to the upper bar and the sum value which is related to the lower bar exceed a pre-determined sum value threshold but the total amount of said line related sum values for the current picture having a value exceeding said pre-determined sum value threshold is lower than a pre-determined maximum sum value number threshold;
Said number of luminance pixel values having a 'black' level exceeds in each one of the two candidate black bar areas a pre-determined black pixel count number threshold;
Said number of luminance pixel values exceeding said brightness level threshold is greater than a pre-determined bright pixel value count number threshold.

Advantageous additional embodiments of the invention are disclosed in the respective dependent claims.

Drawings

Exemplary embodiments of the invention are described with reference to the accompanying drawings, which show in:

Fig. 1    Different useful picture content aspect ratio arrangements;
Fig. 2    Pre-processing by horizontal lowpass filtering;
Fig. 3    Binarisation of the lowpass filtered image;
Fig. 4    Principle of calculating gradient values in the upper and lower picture halves for detecting horizontal transitions;
Fig. 5    Depicted pixel-related gradient values, and histogram of the line-related gradient sums versus the vertical axis;
Fig. 6    Critical grid pattern for the gradient calculation;
Fig. 7    Selected areas, within the black bars as determined, that are investigated further;
Fig. 8    Selected area, within the useful picture content area, in which the quantity of pixel values that exceed a brightness threshold value is determined;
Fig. 9    Principle of calculating gradient values in area B2 of Fig. 7 in order to detect the presence of subtitles;
Fig.10    Block diagram of an inventive apparatus.

Exemplary embodiments

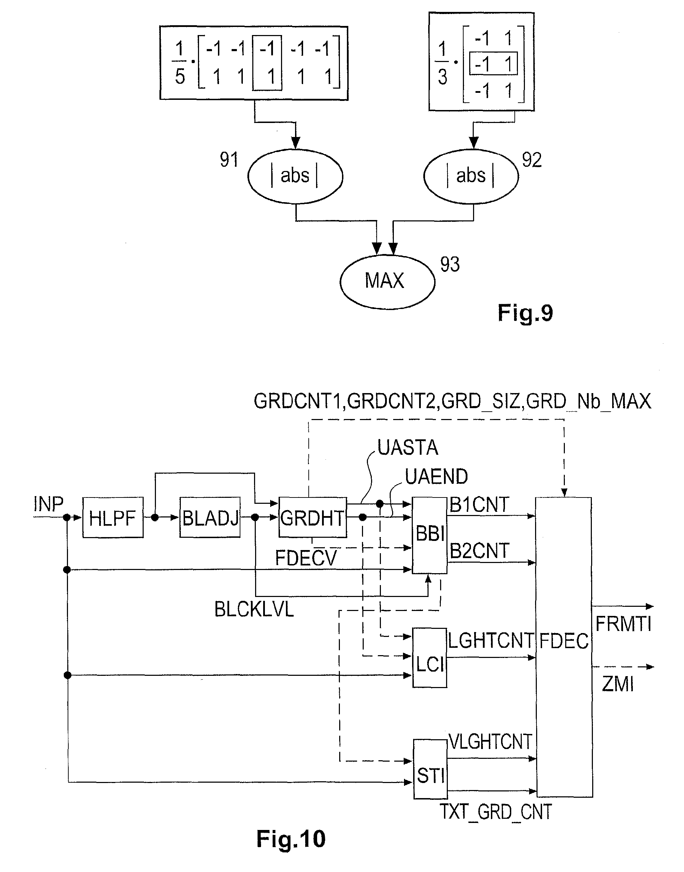

Fig. 10 shows several processing stages that are explained hereafter. With respect to the letterbox detection described in EP-A-0 913 994 this invention uses an improved overall concept. Advantageously the input signal INP is strongly filtered (LPF) in a horizontal low-pass filter HLPF. Basically, the filtering is performed in horizontal direction in order to not soften the vertical transitions between black bars and the rest of the pictures, i.e. the useful picture content. The mask, or coefficients, of this filter is given as [1 1 1 1 1]/5 , where the middle filter coefficient corresponds to the location of the current pixel, and wherein in each case five consecutive sample values in a line are summed up and that sum is divided by '5'. Mathematically speaking, the output pixels Pout are computed as $P_{out}(x,y) = (P_{in}(x-2,y) + P_{in}(x-1,y) + P_{in}(x,y) + P_{in}(x+1,y) + P_{in}(x+2,y))/5$, wherein 'x' is the current horizontal position of the current pixel and 'y' is the current vertical position, i.e. the line.
This filter reduces the impact of noise in the picture without disturbing the important information for the downstream letterbox detector. An example picture showing the lowpass filtering effect is shown in Fig. 2.
The output signal of HLPF is fed to an automatic black level adjustment stage BLADJ. A disadvantage in EP-A-0 913 994 is that the threshold between the 'black area' (black bars) and the 'luminous area' (useful picture content) is depending on a fixed value. However, some picture source material like DVDs and laser discs has an offset in its black level. That offset can even change. Therefore, a new feature for adapting the black level threshold is used. Two analysing areas comprising the first k lines of the active picture and the last k lines of the same picture, denoted as TOP_BLACK and BOTTOM_BLACK areas, respectively, are formed in stage BLADJ.
'Active picture' or 'active part' means the complete picture signal except the horizontal and vertical sync periods.
A pre-determined threshold value BLACKLEVEL_MAX is provided by e.g. the TV chassis software. A second value BLACKLEVEL_ MIN is calculated as follows:

$$BLACKLEVEL\_MIN = \left[\left[\left(\sum_{TOP\_BLACK} (N \text{ smallest luminance pixel values below } BLACKLEVEL\_MAX)\right)\right.\right.$$

$$\left.\left. + \left(\sum_{BOTTOM\_BLACK} (N \text{ smallest luminance pixel values below } BLACKLEVEL\_MAX)\right)\right]\right] / (2*N)$$

wherein N is a pre-determined integer number of samples and BLACKLEVEL_MIN has an initialisation value of '0'. BLACKLEVEL_MIN represents the mean value of 2*N samples from the top and bottom analysing areas TOP_BLACK and BOTTOM_BLACK under the condition that these sample values are below the threshold level BLACKLEVEL_MAX. If it is not possible to find 2*N sample values below BLACKLEVEL_MAX, the value BLACKLEVEL_MIN preferably keeps its value from the previous picture or pictures. The values can be intermediately stored as a table on a pre-determined amount of pictures.

Thereafter a new threshold value is computed:

$$BLCKLVL = BLACKLEVEL\_MIN + BLACK\_LEVEL\_MARGIN ,$$

where BLACKLEVEL_MARGIN is a value given by e.g. the TV chassis software, which value corresponds to a tolerance in the black level threshold, for instance due to the current noise level. This value BLCKLVL will be used in the following calculations as the black level threshold value.

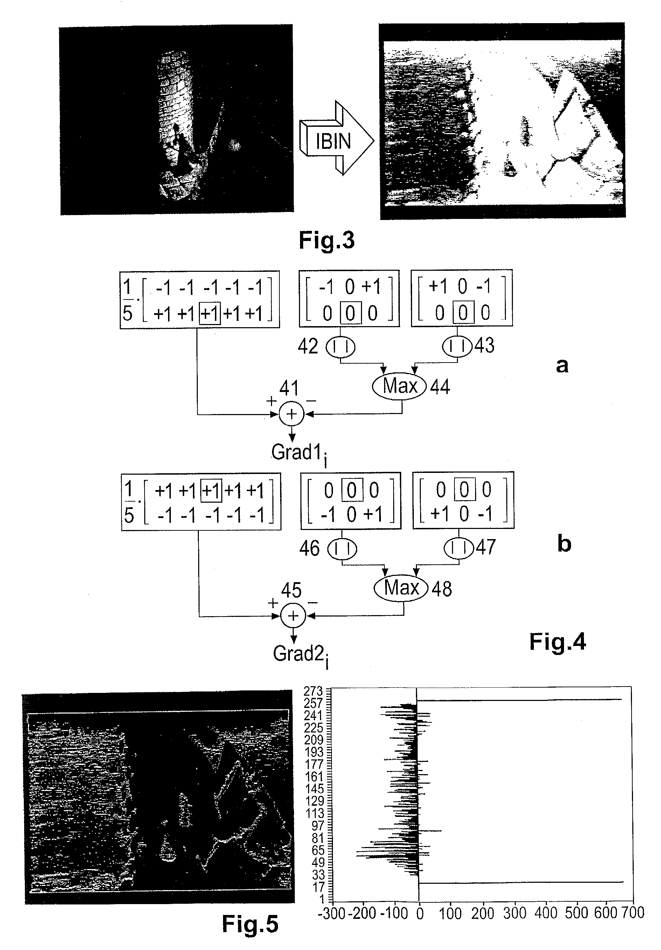

The output signals of the automatic black level adjustment stage BLADJ and of stage HLPF are fed to a horizontal transitions gradient detection stage GRDHT. This stage or block detects the presence of pure horizontal boundaries or frontiers, i.e. significant horizontal borders, between the black or dark bars and the useful picture content part of the picture. In order to detect these frontiers and to avoid the impact of differing luminance levels, an image binarisation IBIN is carried out between pixel values smaller than BLCKLVL and the other pixel values. The pixel values being smaller than BLCKLVL are set to '0' whereas the other pixel values are set to '1'. The result of such binarisation is shown in the right part of Fig. 3.

In stage GRDHT for each pixel in each line of such binarised picture a value is computed that indicates whether the current pixel is on a pure horizontal frontier or not, e.g. by assigning a value '+1' or '+n' for a pixel located on a pure frontier, '0' for 'not located at a frontier' and '-n' for 'located at a non-horizontal structure', n > 0.

For computing these values the following steps are performed: for the upper half of the active picture a gradient value Grad1 is computed for each pixel 'i', whereas for the lower half of the active picture a gradient value Grad2 is computed for each pixel 'i'. The coefficient matrices and formulas used for calculating these two values are given in Fig. 4, in which matrices the position of the current pixel is marked in each case.

In Fig. 4a, for calculating $Grad1_i$ for pixel position 'i', binarised pixel values that are horizontally adjacent and corresponding binarised pixel values from the line above pixel position 'i' are multiplied, or weighted, by the values given in the three multiplier matrices. With the left 5x2 matrix in Fig. 4a, two neighbouring pixels to the left and to the right of a current pixel and five pixels above these pixels are multiplied by the corresponding numbers '+1' or '-1'. The intermediate results of these multiplication operations are summed up and divided by '5' (i.e. the number of pixels per line involved), leading to a result that is fed to subtractor 41. The six binarised pixel values corresponding to the 3x2 matrix in the middle are multiplied by the corresponding matrix factors. The intermediate results are summed up, and in stage 42 the absolute value of the sum is formed. Correspondingly, from the sum of the intermediate results stemming from the right 3*2 matrix the absolute value is formed in stage 43. Out of both absolute values the maximum value is selected in maximum value stage 44. This maximum value is subtracted in subtractor 41, which outputs the current $Grad1_i$ value. If the current pixel is located on a pure horizontal transition, i.e. the binarised pixel values in the line of pixel 'i' are '1' whereas the binarised pixel values in the line above pixel 'i' are '0', the gradient value $Grad1_i$ will be '+1', if not,

the gradient value $Grad1_i$ will be '-1'.

Using in addition the middle and right matrices refines the resulting gradient value.

For calculating gradient value $Grad2_i$, in Fig. 4b the stages 45 to 48 mirror the function of stages 41 to 44 of Fig. 4a respectively. However, instead of multiplying binarised pixel values that are horizontally adjacent and corresponding binarised pixel values from the line above pixel position 'i', binarised pixel values that are horizontally adjacent and corresponding binarised pixel values from the line below pixel position 'i' are used instead.

The resulting pixel-related gradient values are depicted at the left side of Fig. 5. For simplification, only the absolute value, i.e. '0' or '1', is depicted on the left side of Fig. 5.

Also in stage GRDHT, the resulting pixel-related gradient values are summed up per line. These line-related gradient sum values represent the number of 'good' gradient values (i.e. the $Grad1_i$, or $Grad2_i$, values are '+1' and represent a pure horizontal transition) reduced by the number of gradient values representing other structures (i.e. the $Grad1_i$, or $Grad2_i$, values are '-1'). From the line-related gradient sum values the two corresponding lines having the highest positive numbers are determined as depicted at the right side of Fig. 5.

It is apparent that the count of 'good' line-related gradient sum values reaches a very big number (GRDCNT1, GRDCNT2) at the two lines representing the border between the useful picture content and the black bars in the input picture INP. GRDCNT1 and GRDCNT2 reach nearly the number of 704 or 720 pixels per active line.

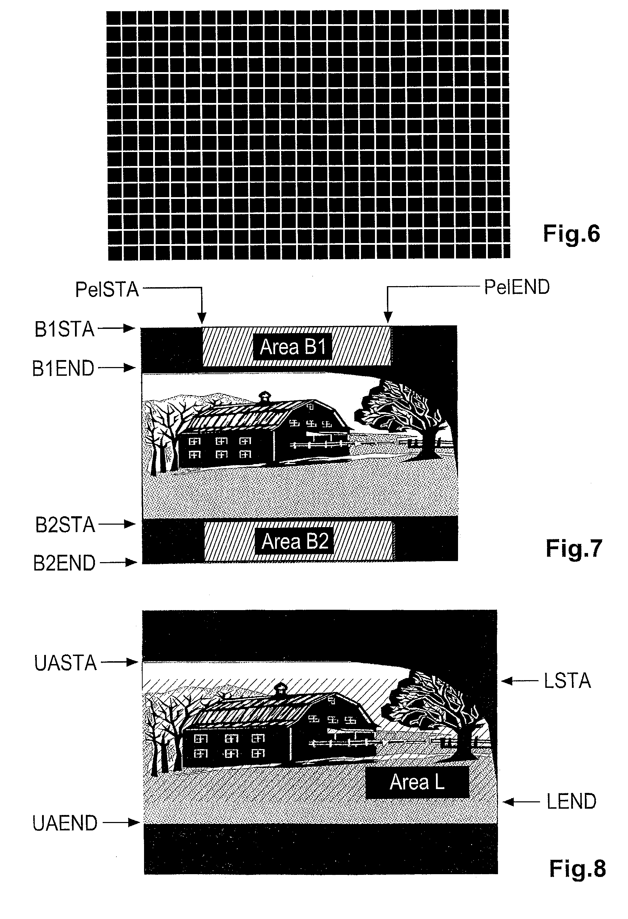

Stage GRDHT outputs the two corresponding line numbers UASTA and UAEND defining the upper and the lower border of the useful area of the total picture content, as depicted in Fig. 8 at the left side, and can output the values GRDCNT1, GRDCNT2, GRD_SIZ and/or GRD_Nb_MAX.

As an option, additional decision reliability can be achieved by computing the quantity of big gradient sum values GRDCNT1 and GRDCNT2 which are greater than a pre-determined threshold value GRD_SIZ. If there are too many such gradient sums (i.e. too many peaks in Fig. 5 at the right side), no decision on the format is taken. Instead, the current format can be kept. In such situation making a renewed decision can be forced as explained below by using a maximum large gradient sum quantity threshold GRD_Nb_MAX that is provided by e.g. the TV software.

The number of big gradient sum values can be greater than two, caused for instance by a picture as shown in Fig. 6, which is a critical grid pattern for gradient detection. In this example it is obvious that the number of GRDCNT1 and GRDCNT2 greater than threshold value GRD_SIZ will be '15'. In such case, if the quantity threshold value GRD_Nb_MAX is set to smaller than '15', the gradient detection is deactivated so that the result for this picture will be "no gradient detected" or "no transition detected" (for a letterbox format).

The output signals UASTA and UAEND and a format decision valid information FDECV are fed from stage GRDHT to a black bars investigation stage BBI. These signals can be transmitted via one, two or three lines. In case the format decision valid information is "no gradient detected" or "no transition detected", no UASTA and UAEND signals need to be transmitted. As an alternative the format decision valid information can be included in the UASTA and UAEND signals, e.g. the transmission of the UASTA and UAEND signals automatically includes the meaning of "valid format decision is present". Value BLCKLVL from stage BLADJ is also fed to stage BBI.

In EP-A-0 913 994 the shape of the black bar investigation areas is pre-defined for the formats 14:9, 16:9 and 2:1, respectivly. Advantageously in the present invention the investigation area size and format is defined by changeable parameters. An area AreaB1 located at the top of the active picture and an area AreaB2 located at the bottom of the active picture are defined. Within either one of these areas each pixel value is compared in stage BBI with the BLCKLVL threshold reference value. The comparison result correspondingly increments a black level counter for each one of the two areas AreaB1 and AreaB2. AreaB1 and AreaB2 are shown in Fig. 7 as hatched areas. They are horizontally limited by the borders located at PelSTA and PelEND in order to avoid disturbances from inserted program provider logos in the following calculations. i.e.they use a middle part of the active lines only but neither the beginning part nor the end part. The top black bar is vertically defined by the values B1STA and B1END, whereas the bottom black bar is vertically defined by the values B2STA and B2END. Preferably the parameters B1STA and B2END are not fixed because in case of e.g. switching between 50Hz and 60Hz field frequency or in case of transmission of vertical sync period non-picture data also in the first or last line of the active picture, the black bars investigation in areas AreaB1 and AreaB2 could be disturbed.

The black bars investigation stage BBI also includes the above-mentioned black level counters that are named B1CNT and B2CNT. Each one of the position parameters B1END and B2STA could have two values:

- A value given by e.g. the TV chassis software;
- An updated value computed using the information coming from the horizontal transitions gradient detection stage GRDHT as follows:

$$B1END = UASTA - Vertical\_Margin,$$

$$B2STA = UAEND + Vertical\_Margin,$$

where the value Vertical_Margin is given by e.g. the TV chassis software and '-' means towards the top of the picture.

In a luminous center investigation stage LCI the luminous center of the useful picture content is studied. For that purpose an area AreaL located vertically in the middle of the picture is used. In stage LCI the value of each pixel from area AreaL is compared to a brightness or light level reference or threshold value LGHTLVL, and a brightness or light counter is incremented, the output of which is a value LGHTCNT. AreaL is defined by the parameter values LSTA and LEND as depicted in Fig. 8. The output of stage LCI is the value LGHTCNT which represents the amount of pixels having a brightness value greater than LGHTLVL. The positions LSTA and LEND are either provided by e.g. the TV software or are computed in dependence on UASTA and UAEND as follows:

$$LSTA = UASTA + Vertical\_Margin\_Center,$$

$$LEND = UAEND - Vertical\_Margin\_Center,$$

where Vertical_Margin_Center is an offset value given by e.g. the TV software.

The presence of a subtitle is determined in a subtitle investigation stage STI. An additional counter that is located either in BBI or in STI counts all such pixel values, within the area AreaB2 as defined in the black bars investigation stage BBI, which in comparison exceed a high-brightness or very-light level reference value VLGHTLVL, and outputs a 'very-light' count value VLGHTCNT representing the quantity of such pixels, since subtitles are represented by mostly very bright luminance levels. However, because in case of noise (e.g. satellite receiver noise) a large amount of white dots can be present in area AreaB2, an additional detection of gradient activity is carried out in stage STI making use of the fact that text is normally made with sharp letters, which fact can be detected. For such detection, a filtering using the two two-dimensional multiplier matrices depicted in Fig. 9 is applied in stage STI for each binarised (i.e. higher or lower than VLGHTLVL) pixel in area AreaB2 (either one of the two marked multipliers or weighting coefficients per matrix represents the position of the current pixel). The filtering according to Fig. 9 is similarly carried out as described in connection with Fig. 4a. The ten pixel values corresponding to the left 5x2 matrix are multiplied or weighted by the corresponding numbers '+1' or '-1'. The intermediate results of these multiplication operations are summed up and divided by '5', leading to a result that is fed to a stage 91 wherein the absolute value of the sum is formed. The six pixel values corresponding to the right 2x3 matrix are multiplied by the corresponding matrix factors and summed up, and in stage 92 the absolute value of the sum is formed. Out of both absolute values the maximum value is selected in maximum value stage 93. If the stage 93 output value exceeds a pre-determined threshold value the filter processing has determined that the current pixel is located either on a vertical or on a horizontal transition. Optionally a further filtering using diagonally arranged matrices can be added to detect if there is a diagonal transition, too.

Over all pixels in area AreaB2 of a current picture the output of this filtering is summed up to a value TXT_GRD_CNT, which value is compared with a threshold value TXT_GRD_MAX to determine whether or not there is a sub-title in the black bottom area.

Furthermore, a corresponding processing can be performed in the top black area AreaB1 for detecting whether there is a top-title.

The final decision on the format of the useful picture content area and on the presence of a subtitle is made in a final decision stage FDEC which receives the necessary signals, parameters and count values mentioned before. For the final decision, two basic situations are possible:

- The useful picture content of previous pictures had 4:3 format and it is currently to be searched for a specific format (16:9, 2:1, 14:9, etc.) different from the 4:3 format;
- The useful picture content of previous pictures had a specific format different from the 4:3 format and it is currently to be investigated whether that specific format is still valid.

Current format is 4:3

For making a decision on switching to a specific format various results are evaluated in stage FDEC. The following conditions must be met:

- UASTA was detected with GRDCNT1 > GradCountMax, where GradCountMax is a pre-determined threshold value that is greater than GRD_SIZ;
- UAEND was detected with GRDCNT2 > GradCountMax;
- The total amount of lines having either GRDCNT1 or GRDCNT2 higher than GRD_SIZ is lower than GRD_Nb_MAX,

where GRD_Nb_MAX is a pre-determined threshold value greater than 2;

- B1CNT > B_Count_MAX, where B_Count_MAX is a pre-determined count number threshold value;
- B2CNT > B_Count_MAX;
- LGHTCNT > LGHTCNT_MAX, where LGHTCNT_MAX is a pre-determined bright pixel count number threshold value.

The specific format type to be selected is based on the first UASTA and last UAEND values if more than one of either value is found.

If therefrom the presence of a specific format is detected, a further detection on sub-title presence is performed. The presence of a sub-title is assumed if:

- VLGHTCNT > VLGHTCNT_MAX, where VLGHTCNT_MAX is a pre-determined threshold value;
- TXT_GRD_CNT > TXT_GRAD_MAX.

The type of zooming to be carried out for a display or screen or TV receiver is derived from the specific format type determined and from the absence or presense of subtitles. The final decision can be made directly by the IC or by an external microcontroller in terms of zoom factor.

Current format is a specific format

For making a decision on staying in that specific format it is only required that:

- B1CNT > B_Count_MAX;
- B2CNT > B_Count_MAX.

Furthermore, if no sub-tile has been previously detected, updating the sub-title format requires:

- VLGHTCNT > VLGHTCNT_MAX;
- TXT_GRD_CNT > TXT_GRAD_MAX.

An adjustment of the specific format type (e.g. from 16:9 to 2:1) is performed if all the following conditions are met:

- UASTA was detected with GRDCNT1 > GradCountMax;
- UAEND was detected with GRDCNT2 > GradCountMax;
- The total amount of GRDCNT1 and GRDCNT2 higher than GRD_SIZ is lower than GRD_Nb_MAX;
- B1CNT > B_Count_MAX;
- B2CNT > B_Count_MAX;
- LGHTCNT > LGHTCNT_MAX;
- The differences between the new UASTA and UAEND values and the previously detected UASTA and UAEND values are greater than a pre-determined threshold value FORMAT_CHANGE_VALUE.

The type of zooming to be carried out for a display or screen or TV receiver is derived from the specific format type determined and from the absence or presense of subtitles.
Final decision stage FDEC outputs a corresponding format information FRMTI and/or a related zoom information ZMI, which information can be used for displaying the useful picture content and/or subtitles in a desired way on a screen or display having 16:9 format or any other format.

Instead of values '+1' and '-1', values '+k' and '-k', with $k \neq 1$ can be used correspondingly in the matrices and/or in the comparisons.

Advantageously, in case of active sub-titles in the picture, the invention provides the real end line UAEND of the useful picture content part of the picture, which enables to suppress in a zoom operation the sub-titles if a viewer has indicated that he does not want to watch them.

The described stages can be implemented by appropriate hardwired circuits or by corresponding computer programs. Optionally in the gradient computation the number of neighbouring pixels could be varied. The matrices used for calculating the gradient values could be modified. Optional rounding steps could be applied to reduce calculation power.

If the brightness in the useful picture content part is too low for making a reliable format decision, it is waited for more luminous pictures to take the decision.

In case the amount of noise present in the pictures is too high for making a reliable format decision, the 4:3 format can be kept but a viewer can select manually on the remote control a desired zoom operation.

The invention can also be used in VCRs. A film can be saved automatically in e.g. a 16:9 format according to the inventive format choice. This reduces loss of picture quality because the zoom is not made on VCR recorded and replayed pictures but on broadcast or e.g. DVD high-quality-replayed pictures.

Advantageously, the invention can also be used for displays suffering from fast ageing (burning or burn-in effect) like PDP or OLED. In that case the format information is used to replace the black areas by corresponding gray areas:

- e.g. top and bottom in case of 16:9 useful picture content on 4:3 screen,
- e.g. top and bottom in case of 2:1 useful picture content on 16:9 screen,
- e.g. left and right in case of 4:3 useful picture content on 16:9 screen.

**Claims**

1. Method for an automatic format decision (FDEC) related to the useful picture content part of a picture signal (INP) that may contain black, or grey, bars and/or subtitles in the active picture, including the steps:

   - Determining (HLPF, BLADJ, GRDHT, BBI) whether or not black, or grey, bars are present in the active picture by analysing (GRDHT) whether significant horizontal borders (UASTA, UAEND) are present between candidate black bars and said useful picture content part,
     and determining where said borders are located by comparing (BBI) luminance pixel values in each one of two candidate black bar areas (AreaB1, AreaB2) with a black level threshold (BLCKLVL) and by counting (B1CNT, B2CNT) in each candidate black bar area the number of pixel values having a 'black' level,
     and by binarising (GRDHT) luminance pixels of the active picture using said black level threshold (BLCKLVL) and determining for the binarised pixel values whether or not a current pixel (i) is located at a horizontal border by multiplying or wheighting the value of the current pixel and the values of horizontally adjacent pixels and the values of corresponding pixels from an adjacent line with two-dimesional matrices of coefficients such that to a current pixel (i) a first value is assigned if it is located at a horizontal border and a second value having a zero value or a sign opposite to that of said first value is assigned if it is not located at a horizontal border,

     wherein (GRDHT) the first and second values are summed up per line and the two highest sum values (GRDCNT1, GRDCNT2) exceeding a sum value threshold (GradCountMax) represent the lines where said borders (UASTA, UAEND) are located;

   - Determining (LCI) whether or not a luminous area (AreaL) located vertically in the middle of the useful picture content is present, by comparing the values of luminance pixels in a candidate luminous area to a brightness level threshold (LGHTLVL) and counting the number (LGHTCNT) of luminance pixel values exceeding said brightness level threshold,

     in which method it is decided (FDEC) that the format of a current useful picture content part is not different from the format of a previous useful picture content part if said number (B1CNT, B2CNT) of luminance pixel values having a 'black' level exceeds in each one of the two candidate black bar areas (AreaB1, AreaB2) a pre-determined black pixel count number threshold (B_Count_MAX),
     **characterised in that** it is decided (FDEC) that the format of a current useful picture content part is different from the format of a previous useful picture content part if the following conditions are met:

   - Of said two highest sum values (GRDCNT1, GRDCNT2), both, the sum value (GRDCNT1) which is related to the upper bar and the sum value (GRDCNT2) which is related to the lower bar exceed a pre-determined sum value threshold (GradCountMax) but the total amount of said line related sum values for the current picture having a value exceeding said pre-determined sum value threshold (GRD_SIZ) is lower than a pre-determined maximum sum value number threshold (GRD_Nb_MAX);

- Said number (B1CNT, B2CNT) of luminance pixel values having a 'black' level exceeds in each one of the two candidate black bar areas (AreaB1, AreaB2) a pre-determined black pixel count number threshold (B_Count_MAX);

- Said number (LGHTCNT) of luminance pixel values exceeding said brightness level threshold (LGHTLVL) is greater than a pre-determined bright pixel value count number threshold (LGHTLVL_MAX).

2. Apparatus for automatic format decision (FDEC) related to the useful picture content part of a picture signal (INP) that may contain black, or grey, bars and/or subtitles in the active picture, said apparatus including:

- Means (HLPF, BLADJ, GRDHT, BBI) for determining whether or not black, or grey, bars are present in the active picture by analysing (GRDHT) whether significant horizontal borders (UASTA, UAEND) are present between candidate black bars and said useful picture content part,
   and for determining where said borders are located by comparing (BBI) luminance pixel values in each one of two candidate black bar areas (AreaB1, AreaB2) with a black level threshold (BLCKLVL) and by counting (B1CNT, B2CNT) in each candidate black bar area the number of pixel values having a 'black' level,
   and for binarising (GRDHT) luminance pixels of the active picture using said black level threshold (BLCKLVL) and determining for the binarised pixel values whether or not a current pixel (i) is located at a horizontal border by multiplying or wheighting the value of the current pixel and the values of horizontally adjacent pixels and the values of corresponding pixels from an adjacent line with two-dimesional matrices of coefficients such that to a current pixel (i) a first value is assigned if it is located at a horizontal border and a second value having a zero value or a sign opposite to that of said first value is assigned if it is not located at a horizontal border,

   wherein (GRDHT) the first and second values are summed up per line and the two highest sum values (GRDCNT1, GRDCNT2) exceeding a sum value threshold (GradCountMax) represent the lines where said borders (UASTA, UAEND) are located;

- Means (LCI) for determining whether or not a luminous area (AreaL) located vertically in the middle of the useful picture content is present, by comparing the values of luminance pixels in a candidate luminous area to a brightness level threshold (LGHTLVL) and counting the number (LGHTCNT) of luminance pixel values exceeding said brightness level threshold;
   Means (FDEC) for deciding that the format of a current useful picture content part is not different from the format of a previous useful picture content part if said number (B1CNT, B2CNT) of luminance pixel values having a 'black' level exceeds in each one of the two candidate black bar areas (AreaB1, AreaB2) a pre-determined black pixel count number threshold (B_Count_MAX),

   **characterised in that** said means (FDEC) for deciding decide that the format of a current useful picture content part is different from the format of a previous useful picture content part if the following conditions are met:

- Of said two highest sum values (GRDCNT1, GRDCNT2), both, the sum value (GRDCNT1) which is related to the upper bar and the sum value (GRDCNT2) which is related to the lower bar exceed a pre-determined sum value threshold (GradCountMax) but the total amount of said line related sum values for the current picture having a value exceeding said pre-determined sum value threshold (GRD_SIZ) is lower than a pre-determined maximum sum value number threshold (GRD_Nb_MAX);

- Said number (B1CNT, B2CNT) of luminance pixel values having a 'black' level exceeds in each one of the two candidate black bar areas (AreaB1, AreaB2) a pre-determined black pixel count number threshold (B_Count_MAX);

- Said number (LGHTCNT) of luminance pixel values exceeding said brightness level threshold (LGHTLVL) is greater than a pre-determined bright pixel value count number threshold (LGHTLVL_MAX).

3. Method according to claim 1 or apparatus according to claim 2, wherein the presence of a sub-title in said lower or upper, respectively, bar, is detected by:

- Counting the number (VLGHTCNT) of pixels in the lower or upper, respectively, candidate black bar area (AreaB1, AreaB2) the values of which exceed a pre-determined high-brightness reference value (VLGHTLVL);

- Determining using binarised pixel values for the pixels in said lower or upper, respectively, candidate black bar area (AreaB1, AreaB2) whether a current pixel is located at a vertical or horizontal transition by multiplying or wheighting the value of the current pixel and the values of horizontally and vertically, respectively, adjacent pixels and the values of corresponding pixels from an adjacent line and column, respectively, with two-dimesional matrices of coefficients, and by comparing transition representative values derived therefrom with a pre-determined transition level threshold value,

whereby the presence of a sub-title is assumed if the number (VLGHTCNT) of pixels in the lower or upper, respectively, candidate black bar area (AreaB1, AreaB2) exceeding said pre-determined high-brightness reference value (VLGHTLVL) exceeds a pre-determined high-brightness pixel count threshold value (VLGHTCNT_MAX)

and the number (TXT_GRD_CNT) of pixels in the lower or upper, respectively, candidate black bar area (AreaB1, AreaB2) for which said transition representative values exceed said transition level threshold value exceeds a pre-determined horizontal/vertical transition pixel count threshold value (TXT_GRAD_MAX).

4. Method or apparatus according to one of claim 1 to 3, wherein a final value for said black level threshold (BLCKLVL) to be used in said two candidate black bar areas (AreaB1, AreaB2) is calculated (BLADJ) for a current picture as follows:

- A preliminary pre-determined black level threshold is used for preliminaryly counting in each one of the two candidate black bar areas the number of pixel values having a 'black' level;
- From the such found 'black' level pixel values the average (BLACKLEVEL_MIN) of the mean value of the N smallest 'black' level pixel values in the upper black bar area (AreaB1) and of the mean value of the N smallest 'black' level pixel values in the lower black bar area (AreaB2) is calculated, wherein N is a pre-determined integer number;
- If 2 times N such preliminary 'black' level pixel values have been found, a pre-determined margin value (BLACK_LEVEL_MARGIN) is added to said preliminary black level threshold, thereby providing the final value for said black level threshold (BLCKLVL) to be used in the further processing (BLADJ).

5. Method or apparatus according to one of claims 1 to 4, wherein said candidate black bar areas (AreaB1, AreaB2) do not cover a beginning part and an end part of the active lines in order to avoid calculations disturbances resulting from inserted program provider logos.

6. Method or apparatus according to one of claims 1 to 5, wherein the original or received or replayed picture signal (INP) processed in said step of determining whether or not black, or grey, bars are present in the active picture is horizontally low-pass filtered (HLPF) in the beginning.

7. Method or apparatus according to one of claims 1 to 6, wherein the original or received or replayed picture signal has a 4:3 active picture aspect ratio, and information (ZMI) about the type of zooming to be carried out for a 16:9 display or screen or TV receiver is derived from the automatic format detection related information (FRMTI).

8. Method or apparatus according to claim 7, wherein said zooming type information (ZMI) is derived also from said information about the absence or presense of subtitles in the bottom or top bar.

9. Use of the method according to one of claims 1 or 3 to 8 in a video recording device for format detection of the picture signal to be recorded, in order to control a recording operation such that the picture signal is recorded in a picture format different from a standard picture format.

10. Use of the method according to one of claims 1 or 3 to 8 in a television receiver for format detection of the received picture signal, in order to correspondingly control a zoom operation for adaptation of said picture format to the format of the display,
or in order to achieve burn-in or burning safety, whereby the black areas are replaced by corresponding gray areas.

**Fig.1**

**Fig.2**

**Fig.3**

**Fig.4**

**Fig.5**

**Fig.6**

PelSTA

PelEND

B1STA

B1END

Area B1

B2STA

B2END

Area B2

**Fig.7**

UASTA

LSTA

Area L

LEND

UAEND

**Fig.8**

$$\frac{1}{5}\cdot\begin{bmatrix}-1 & -1 & -1 & -1 & -1\\ 1 & 1 & 1 & 1 & 1\end{bmatrix}$$

$$\frac{1}{3}\cdot\begin{bmatrix}-1 & 1\\ -1 & 1\\ -1 & 1\end{bmatrix}$$

91  | abs |

92  | abs |

MAX  93

**Fig.9**

GRDCNT1,GRDCNT2,GRD_SIZ,GRD_Nb_MAX

UASTA

UAEND

INP → HLPF → BLADJ → GRDHT

FDECV

BLCKLVL

BBI  B1CNT

B2CNT

LCI  LGHTCNT

FDEC  FRMTI

ZMI

STI  VLGHTCNT

TXT_GRD_CNT

**Fig.10**

**European Patent Office**

## EUROPEAN SEARCH REPORT

Application Number

EP 03 09 0338

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | EP 0 913 994 A (THOMSON BRANDT GMBH) 6 May 1999 (1999-05-06) * paragraph [0004] - paragraph [0039] * --- | 1-10 | H04N5/44 H04N7/00 |
| A | US 6 340 992 B1 (MARKANDEY VISHAL) 22 January 2002 (2002-01-22) * column 2, line 3 - line 48 * * column 3, line 40 - column 4, line 10 * --- | 1-10 | |
| A | EP 1 051 033 A (THOMSON MULTIMEDIA SA) 8 November 2000 (2000-11-08) * the whole document * --- | 1-10 | |
| A | EP 0 800 311 A (MATSUSHITA ELECTRIC IND CO LTD) 8 October 1997 (1997-10-08) * the whole document * ----- | 1-10 | |

|  |  |
|---|---|
|  | TECHNICAL FIELDS SEARCHED (Int.Cl.7) |
|  | H04N |

The present search report has been drawn up for all claims

| Place of search | Date of completion of the search | Examiner |
|---|---|---|
| BERLIN | 1 April 2004 | Oberreich, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 03 09 0338

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2004

| Patent document cited in search report | | Publication date | Patent family member(s) | | Publication date |
|---|---|---|---|---|---|
| EP 0913994 | A | 06-05-1999 | EP | 0913993 A1 | 06-05-1999 |
| | | | EP | 0913994 A1 | 06-05-1999 |
| | | | CN | 1220546 A | 23-06-1999 |
| | | | JP | 11205714 A | 30-07-1999 |
| | | | US | 6366706 B1 | 02-04-2002 |
| US 6340992 | B1 | 22-01-2002 | NONE | | |
| EP 1051033 | A | 08-11-2000 | FR | 2793375 A1 | 10-11-2000 |
| | | | CN | 1273487 A | 15-11-2000 |
| | | | EP | 1051033 A1 | 08-11-2000 |
| | | | JP | 2000341603 A | 08-12-2000 |
| EP 0800311 | A | 08-10-1997 | EP | 0800311 A1 | 08-10-1997 |
| | | | CN | 1167401 A ,B | 10-12-1997 |
| | | | DE | 69614365 D1 | 13-09-2001 |
| | | | DE | 69614365 T2 | 22-11-2001 |
| | | | JP | 3435301 B2 | 11-08-2003 |
| | | | JP | 9270966 A | 14-10-1997 |
| | | | SG | 54488 A1 | 16-11-1998 |

EPO FORM P0459

For more details about this annex : see Official Journal of the European Patent Office, No. 12/82